# EUROPEAN PATENT APPLICATION

(11) **EP 4 553 687 A1**
(43) Date of publication of application: **14.05.2025**
(21) Application number: 24212233.1
(22) Date of filing: 11.11.2024
(51) Int. Cl.: G06F 30/10, G06F 30/12, G06T 17/20, H04L 9/32, H04L 9/00, G06F 30/00

(54) **SYSTEM FOR MODEL DISTRIBUTION AND ASSOCIATED METHODS**

(30) Priority: 09.11.2023 US 202318505483
(71) Applicant: RTX Corporation, Farmington, CT 06032 (US)
(72) Inventor: KUMAR, Keshava B., Farmington, 06032 (US)
(74) Representative: Dehns

(57) **Abstract**

A system (20) for distributing a tessellated model (36) may include one or more processors (24) coupled to memory (26), which may be collectively operable to execute a distribution environment (69). The distribution environment (69) may be operable to access a CAD model (32) associated with geometry (33) and generate a tessellated model (36) including geometric object(s) (54) that establish a tessellation of the geometry (33). The geometric object(s) (54) may be operable to display the tessellation in a viewing window (52-1) of a user interface (48) according to views associated with respective view identifiers (60). Each of the views may be associated with a respective depiction of the geometric object(s) (54) in the user interface (48). The distribution environment (69) may be operable to determine transaction parameter(s) (70) associated with a smart contract (66). The transaction parameter(s) (70) may include a view access parameter (72) specifying one or more of the view identifiers (60). A method of distribution for a tessellated model (36) is also disclosed.

## Description

### TECHNICAL FIELD

This disclosure relates to modeling and interacting with the design of various components.

### BACKGROUND

Computer-Aided Design (CAD) systems are known and may be utilized to generate two-dimensional and three-dimensional (3D) models of various components. The associated CAD files may be relatively large, which may impede transfer to other computing systems. A lightweight, tessellated representation of the CAD model may be generated and stored within a file that excludes the original CAD model. The file may be saved in a Portable Document Format (PDF) or another file format. A lightweight viewer may be utilized to view the lightweight representation.

A blockchain may be established to distribute various files based on the terms of a smart contract.

### SUMMARY

According to an aspect of the present invention, a system for distributing a tessellated model may include one or more processors coupled to memory. The one or more processors may be collectively operable to execute a distribution environment. The distribution environment may be operable to access a computer-aided design (CAD) model associated with geometry. The distribution environment may be operable to generate a tessellated model including one or more geometric objects that establish a tessellation of the geometry. The one or more geometric objects may be operable to display the tessellation in a viewing window of a user interface according to a plurality of views associated with respective view identifiers. Each of the views may be associated with a respective depiction of the one or more geometric objects in the user interface. The distribution environment may be operable to determine one or more transaction parameters associated with a smart contract. The one or more transaction parameters may include a view access parameter specifying one or more of the view identifiers. The distribution environment may be operable to store at least one instance of the tessellated model in a respective tessellated file readable by a lightweight viewer. The at least one instance of the tessellated model may be associated with a combination of the views specified by the view access parameter. The distribution environment may be operable to generate a hash value for the respective tessellated file based on the one or more transaction parameters.

In in embodiment of the above, the distribution environment may be operable to generate the smart contract. The smart contract may include the hash value and the one or more transaction parameters. The distribution environment may be operable to store the smart contract in a block of a blockchain.

In an embodiment according to any of the previous embodiments, the distribution environment may be operable to store the tessellated file in the block of the block chain.

In an embodiment according to any of the previous embodiments, the distribution environment may be operable to store each transaction associated with the smart contract in a respective block on the block chain.

In an embodiment according to any of the previous embodiments, the smart contract may be operable to permit access to the tessellated file in response to one or more criteria being met, the one or more criteria may include receiving information in a request that matches the hash value and the one or more transaction parameters, but may be operable to block access to the tessellated file in response to the one or more criteria not being met.

In an embodiment according to any of the previous embodiments, the smart contract may be operable to cause the tessellated file to be displayed in the user interface accessible by a requesting device associated with the request in response to the one or more criteria being met.

In an embodiment according to any of the previous embodiments, the one or more transaction parameters may include at least one of the following: an entity identifier associated with an entity; an access duration of the tessellated file; a part number assigned to the geometry; an internet protocol (IP) address and/or domain associated with the entity; one or more repair limit parameters associated with the geometry; and an asset identifier associated with a manufacturing device.

In an embodiment according to any of the previous embodiments, the distribution environment may be operable to generate one or more content objects operable to selectively display information associated with the tessellated model in the user interface. The tessellated model may include the one or more content objects.

In an embodiment according to any of the previous embodiments, the one or more transaction parameters may include a content access parameter that specifies access constraints to the information.

In an embodiment according to any of the previous embodiments, the information may include at least one of the following: one or more datums associated with the geometry; one or more annotations associated with the geometry; one or more repair limits associated with the geometry; and one or more material characteristics associated with the geometry.

In an embodiment according to any of the previous embodiments, the at least one instance of the tessellated model may include a first instance and a second instance. The first instance may be associated with a first combination of the views. The second instance may be associated with a second combination of the views that differs from the first combination of the views.

In an embodiment according to any of the previous embodiments, the smart contract may be operable to permit access to the first instance of the tessellated file in response to the one or more criteria being met. The smart contract may be operable to permit access to the second instance of the tessellated file but not the first instance in response to fewer than all of the one or more criteria being met. The second combination of the views may exclude one or more views of the first combination.

In an embodiment according to any of the previous embodiments, the tessellated model may include one or more view objects associated with the respective depiction of the one or more geometric objects. The one or more view objects may be assigned the respective view identifiers. The user interface may include a navigation window operable to display the one or more view objects in a linked list according to the respective view identifiers. The viewing window may be operable to display the depiction in response to selection of the respective view object from the linked list.

In an embodiment according to any of the previous embodiments, the tessellated model may exclude any CAD model associated with the geometry.

According to another aspect of the present invention, a system for distributing a tessellated model may include one or more processors coupled to memory. The one or more processors may be collectively operable to execute a distribution environment. The distribution environment may be operable to generate a tessellated model including one or more geometric objects that establish a tessellation of geometry associated with a computer-aided design (CAD) model. The one or more geometric objects may be operable to display the tessellation in a user interface according to a plurality of views associated with respective view identifiers. Each of the views may be associated with a respective depiction of the one or more geometric objects in the user interface. The distribution environment may be operable to determine one or more transaction parameters associated with a smart contract. The one or more transaction parameters may include a view access parameter specifying one or more of the view identifiers. The distribution environment may be operable to store at least one instance of the tessellated model in a respective tessellated file readable by a lightweight viewer. The at least one instance of the tessellated model may be associated with a combination of the views specified by the view access parameter. The distribution environment may be operable to generate a hash value for the respective tessellated file based on the one or more transaction parameters. The distribution environment may be operable to cause the smart contract to be stored in a block of a blockchain. The smart contract may include the hash value. The one or more transaction parameters and a memory location may be associated with the respective tessellated file.

In an embodiment of the above, the smart contract may be operable to permit display of one or more of the views on a requesting device in response to one or more criteria being met, the one or more criteria may include receiving information in a request by the requesting device that matches the hash value and the one or more transaction parameters, but may block display of the one or more of the views on the requesting device in response to the one or more criteria not being met.

In an embodiment according to any of the previous embodiments, the tessellated model may include a plurality of view objects assigned the respective view identifiers. The user interface may be operable to display the view objects according to the respective view identifiers. The user interface may be operable to display the depiction in response to selection of the respective view object.

According to another aspect of the present invention, a method of distribution for a tessellated model may include generating a tessellated model including one or more geometric objects that establish a tessellation of geometry stored in a computer-aided design (CAD) model. The one or more geometric objects may be operable to display the tessellation in a user interface according to a plurality of views. The view objects may be associated with respective view identifiers and respective depictions of the one or more geometric objects in the user interface. The method may include determining one or more transaction parameters associated with a smart contract. The one or more transaction parameters may include a view access parameter specifying one or more of the view identifiers; The method may include storing at least one instance of the tessellated model in a respective tessellated file readable by a lightweight viewer. The at least one instance of the tessellated model may be associated with a combination of the views specified by the view access parameter. The method may include generating a hash value for the respective tessellated file based on the one or more transaction parameters. The method may include permitting display of one or more of the views on a requesting device in response to one or more criteria being met, the one or more criteria may include receiving information in a request by the requesting device that matches the hash value and the one or more transaction parameters, but may include blocking display of the one or more of the views on the requesting device in response to the one or more criteria not being met.

In an embodiment of the above, the method may include generating the smart contract. The smart contract may include the hash value and the one or more transaction parameters. The method may include storing the smart contract in a block of a blockchain. The smart contract may be operable to perform the permitting and blocking steps.

In an embodiment according to any of the previous embodiments, the permitting step may include communicating the respective tessellated file to a memory location accessible by the requesting device.

In an embodiment according to any of the previous embodiments, the at least one instance of the tessellated model may include a first instance and a second instance. The first instance may be associated with a first combination of the views. The second instance may be associated with a second combination of the views that may differ from the first combination of the views. The permitting step may include permitting access to one of the first and second combinations according to the combination of the views specified by the view access parameter.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses a modeling system.
Figure 2 discloses a graphical depiction of a tessellated model.
Figure 3 discloses an arrangement of a tessellated model and smart contract.
Figure 4A discloses a graphical user interface for depicting geometry.
Figure 4B discloses selected portions of the user interface of Figure 4A.
Figure 4C discloses another depiction of the geometry of Figure 4A in the user interface.
Figure 5A discloses a list of selectable views in a window of the user interface according to an implementation.
Figure 5B discloses a list of selectable views in a window of the user interface according to another implementation.
Figure 6A discloses transaction parameters associated with a tessellated model according to an implementation.
Figure 6B discloses transaction parameters associated with a smart contract according to an implementation.
Figure 7 discloses a method of generating a tessellated model.
Figure 8 discloses a method of distributing a tessellated model.

Like reference numbers and designations in the various drawings indicate like elements.

### DETAILED DESCRIPTION

Model-based definitions (MBD) associated with CAD models may be utilized to generate tessellated models. The tessellated models may be rendered in a lightweight viewer. Access to product information associated with the MBD may be monitored and controlled. Access may include when, how and for what duration requestors may access the models and/or other information. The information and associated files may be provided in various formats, including any of the formats disclosed herein. Access may be terminated after a specified duration. In scenarios, the tessellated model may be stored in a human readable format, such as a 3D PDF file. The file and/or aspects of the associated model may be shared with various entities (e.g., suppliers) according to various criteria. For sustainment operations, repair information may only be shared with specific repair entities. Although the techniques herein primarily refer to controlling access to tessellated models and/or files, it should be understood that the teachings herein may be utilized to control other files and information.

Application programming interface (API) functions may be used to create views of the geometry in the tessellated model. The views may be assigned unique identifiers (e.g., names). The tessellated model may be operable to establish a view window. The view window may specify a list of the available views of the geometry. The code (e.g., script) to generate the views and view window may be embedded within a lightweight (e.g., tessellated) file. The tessellated file may be stored in a lightweight format, such as a Portable Document File (PDF) format. Accordingly, the lightweight viewer does not have to be programmed to support the views and any lightweight viewer that supports the file format may access the tessellated model.

The disclosed systems and methods may be utilized to partially and/or completely restrict access to the tessellated files and/or models based on a contractual agreement. Smart contracts may be established to facilitate a contractual agreement between two or more entities (e.g., parties). The smart contract may specify the terms of access to the files and/or aspects of the associated models. The smart contract may include logic that may be implemented as an executable program that may be stored in a block (e.g., record) of a blockchain. The blockchain may serve as a distributed ledger. The smart contract may be operable to self-execute when one or more (e.g., predetermined) criteria are met, which may be established according to the terms of the agreement. The program may execute on a virtual machine embedded in the blockchain. The smart contract may be operable to listen for event updates from one or more computing devices to determine whether the criteria are met.

The smart contract and blockchain may be utilized to limit access to the tessellated file, model and/or associated artifacts (e.g., list), including limiting access to specific users, computing devices, any end user(s) or machines, etc. associated with parties to the agreement, limit duration and/or remove granted access when criteria specified by the smart contract are no longer met. Although the disclosed techniques primarily refer to tessellated files, it should be understood that the techniques disclosed herein may be utilized for other files (e.g., human readable and/or machine readable).

The disclosed systems and methods may be utilized to control access to a tessellated file and/or specific views of the geometry in the tessellated file based on generated transactional hash value(s) associated with the file, specific view(s) and/or other terms specified in a smart contract transaction. The hash value may be cryptic and may only be understood by a hashing algorithm. The hash value may not be modifiable. The smart contract may include the transactional hash value and other information relating to contracted access. The terms may include a duration in which access is permitted, specific view(s) that may be accessed, specific business entities, users and/or devices that may access the tessellated file, etc. Information associated with the smart contract transaction may be stored according to one or more data structures.

The system may be configured to control access to various views of the tessellated file. Each view may be assigned a unique identifier (e.g., name). The view window may specify a list of the accessible views. In implementations, the tessellated file may be operable to indicate a list of accessible views and any inaccessible views in a visually distinct manner (e.g., shading, font color, etc.). In other implementations, any inaccessible views may be omitted from the list. The smart contract transaction may specify which view(s) of the tessellated file the entity may have access to. The specific view(s) may be specified as parameters in the smart contract transaction. The tessellated file may include one or more views that obscure details of the geometry. In implementations, the user may only be allowed to view a thumbnail of the geometry until the contract terms are accepted. Once the contract terms are accepted, the user may open other views and/or other information such as datums, annotations, etc. For example, if the part is coated, the entity may be permitted to view dimensions and materials associated with the part. The system may generate a new hash value, which may be communicated to the user, to permit the user to view or otherwise access the additional information.

Transactional hash values may be generated for different instances of the tessellated file based on the various views. The user or entity seeking access to specific view(s) may renegotiate the contact terms. Another smart contract transaction may be generated to capture the renegotiated terms, which may be stored as another block chain record. Different block chain records may be established for the various views and/or access levels to information in the tessellated file. The block chain records may be associated with respective instances of the tessellated file. The system may be adapted to only provide access to the entity based on a supplied hash value matching the block chain record. The blockchain may be utilized to record all transactions associated with the geometry.

The requesting entity may request access to data on the blockchain, including access to tessellated model and/or tessellated file. The request may include various credentials including a hash value. The smart contract may be operable to permit access to the requested data in response to the provided hash value and/or other credentials matching the transactional hash value associated with the requested data. Otherwise, the smart contract may be operable to deny access to the requested data.

The system may communicate the transactional hash value to the entity once the contract terms are accepted, which may be stored on a local device. The entity may interact with a client application or portal to supply the transactional hash value and other information specified in the smart contract transaction (e.g., entity and/or username, part number(s), IP address or domain, machine asset information, etc.). The smart contract and/or another portion of the system may compare the supplied transactional hash value and other information to the smart contract transaction to permit or deny access to the tessellated file and/or specific views. The system may permit the tessellated file to be displayed in a browser and/or downloaded on a local device for display in a lightweight viewer. The block chain record may specify a location of the tessellated file, but not the tessellated file itself. The system may communicate the file location in response to verifying access to the tessellated file. If downloads are permitted, the system may be adapted to store occurrences of downloads and related information as separate block chain records.

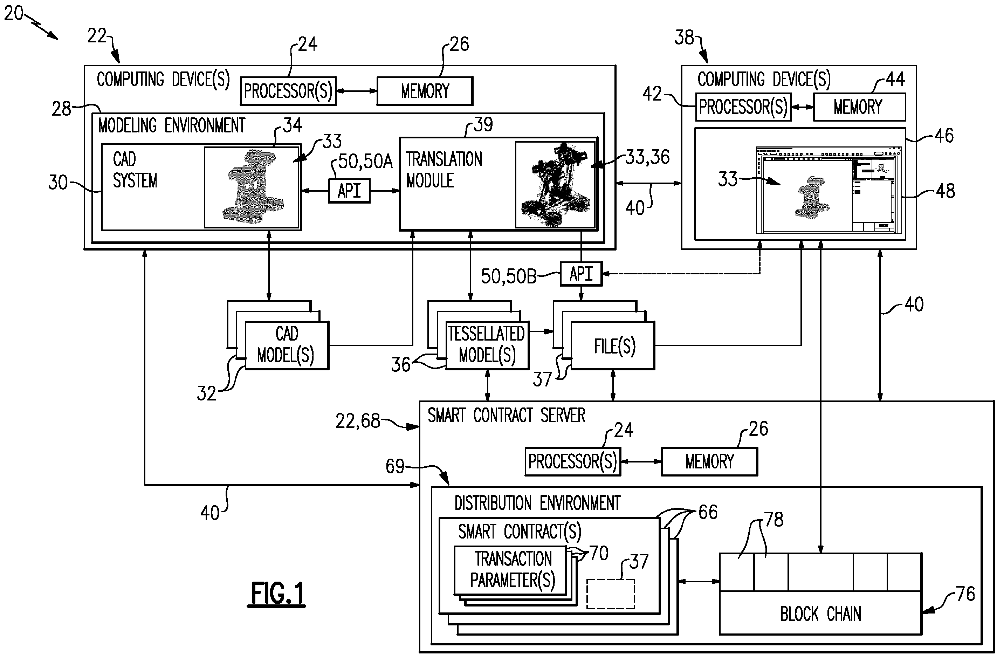

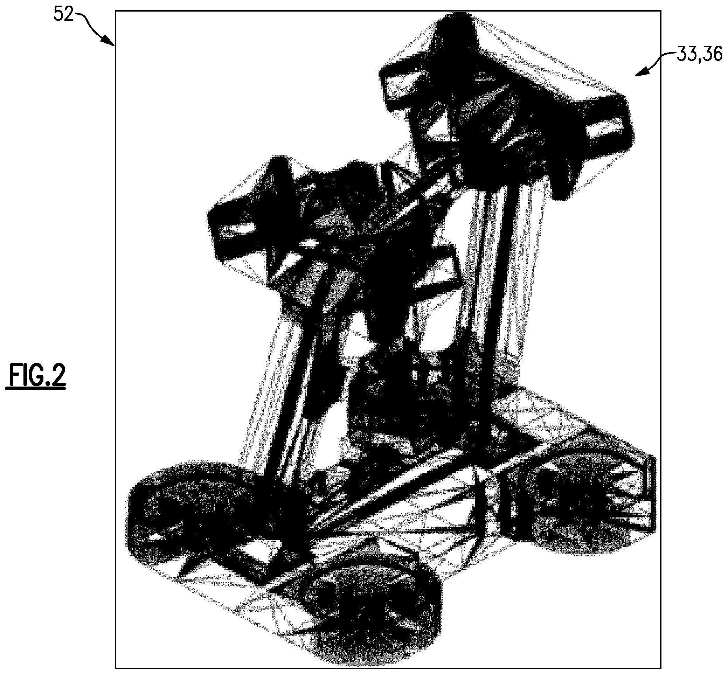

Figure 1 discloses a modeling (e.g., distribution) system 20. The system 20 may be operable to interact with one or more computer-aided design (CAD) models. The system 20 may be operable to generate one or more tessellated models from the CAD model(s). The tessellated model may be relatively compact and may include a lesser amount of data compared to the CAD model. The tessellated model may represent CAD geometry as a set of facets (e.g., triangles) that may be patched together (e.g., Figure 2). Each of the facets may be defined by three respective points of a point cloud. The features disclosed herein may be incorporated into, or may otherwise be utilized with, a lightweight viewer. The tessellated models may be viewable in the lightweight viewer. For the purposes of this disclosure, a "lightweight viewer" is a software application suitable to view tessellated models. The lightweight viewer may be operable to view and interact with, but not edit, the tessellated model. Lightweight viewers may include a 3D PDF or HTML viewer or another viewer such as JT2Go operable to access tessellated models stored in a lightweight file format. The lightweight viewer may be executable on a local device or may be accessible by interfacing with a web browser or thin client. The system 20 may be operable to distribute tessellated model(s), including various views and/or information associated with geometry depicted by the respective model, utilizing any of the techniques disclosed herein.

The system 20 may include one or more computing devices 22. The computing device(s) 22 may include one or more processors 24 coupled to memory 26. The processor(s) 24 may be collectively operable to execute a modeling environment 28. The modeling environment 28 may incorporate or may otherwise interface with a CAD system 30 (e.g., CATIA, AutoCAD, Solidworks, Siemens NX, Creo, etc.). The CAD system 30 and/or another portion of the modeling environment 28 may be operable to access one or more CAD models 32. Each of the CAD models 32 may be associated with geometry. The geometry may be associated with one or more virtual and/or physical components, assemblies and/or systems. The CAD system 30 may be operable to display one or more of the CAD models 32 in a user interface 34.

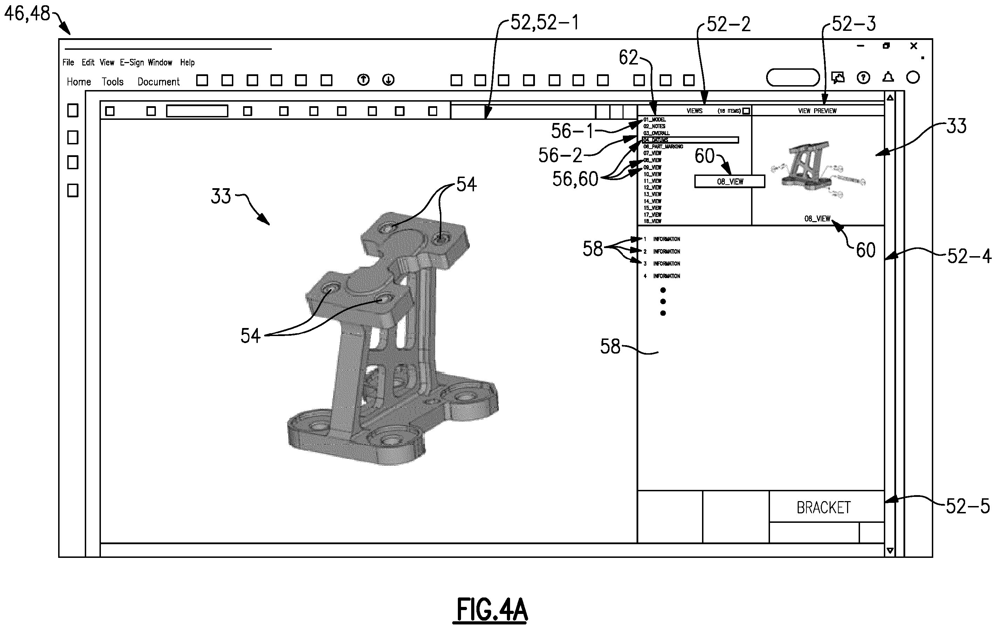

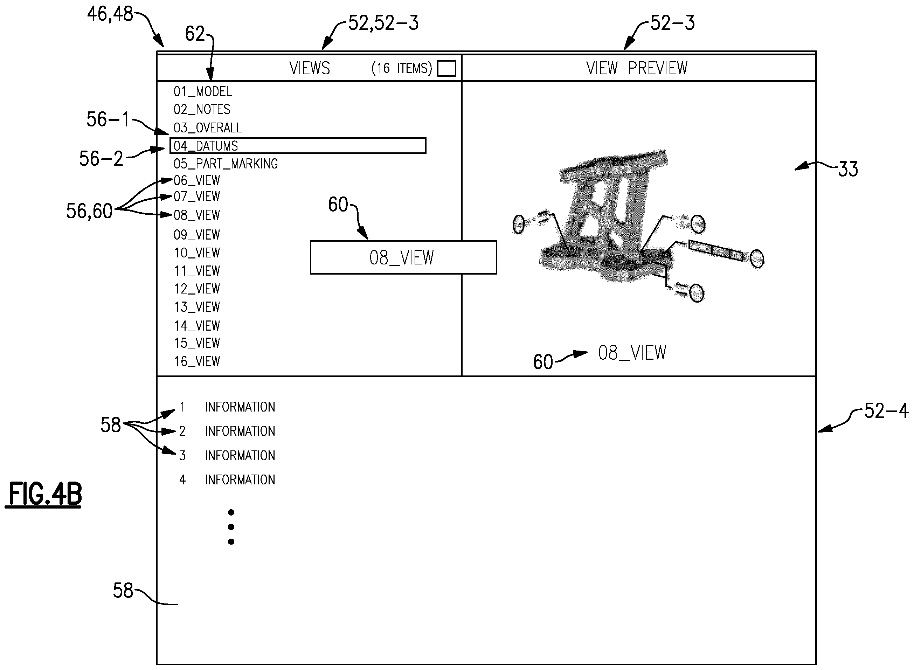

A user may desire to share or otherwise communicate information associated with the design to one or more other users, such as another member of a development team, a customer, or a supplier. The modeling environment 28 may be operable to generate one or more tessellated models 36, which may include a relatively lesser amount of information than the associated CAD model(s) 32 for communication to the other users. The modeling environment 28 may be operable to store the tessellated model 36 in one or more lightweight (e.g., tessellated) files 37. The CAD model 32 and tessellated model 36 may be associated with geometry 33 (e.g., Figures 2 and 4A). The tessellated model 36 may exclude the exact CAD geometry and/or any CAD model 32 associated with the geometry 33. In implementations, the tessellated file 37 may exclude any CAD models 32, including any CAD models 32 utilized to establish, or that may otherwise be related to, tessellated model(s) 36 of the respective geometry 33.

Various users may access and review the tessellated models 36 in a lightweight viewer 46. Various lightweight viewers may be utilized, such as Adobe which may be operable to access PDF files. The lightweight viewer 46 may be operable to access and view lightweight files containing tessellated models but not any files containing CAD models, including the exact CAD geometry. In other implementations, the modeling environment 28 may be operable to store the tessellated model 36 and the exact CAD geometry in the same file. The tessellated files 37 may be readable by a lightweight viewer, such as the lightweight viewer 46. Each of the tessellated models 36 may be associated with one or more respective CAD models 32 that store the exact CAD geometry and related information. Figure 2 discloses a graphical depiction of a tessellated model 36 according to an implementation. The specific geometry of the depicted tessellated model 36 is not intended to limit this disclosure.

The modeling environment 28 may be operable to access and/or display the tessellated model(s) 36. In implementations, one or more (e.g., client) computing devices 38 may be operable to access the tessellated models 36. The computing devices 22, 38 may include one or more computer processors, memory, storage means, network devices, input and/or output devices, and/or interfaces. The computing devices 22, 38 may be operable to execute one or more software programs, including one or more portions of the modeling environment 28 (and/or distribution environment 69). The computing devices 22, 38 may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing devices 22, 38 may be a desktop computer, laptop computer, smart phone, tablet, or any other computer device. Input devices may include a keyboard, mouse, touchscreen, etc. The output devices may include a monitor, speakers, printers, etc. Each of the computing devices 38 may include one or more processors 42 coupled to memory 44. The computing devices 22, 38 may be coupled to each other by one or more connections 40. The connection 40 may be a wired and/or wireless connection. The connection 40 may be established over one or more networks and/or other computing systems.

The processor 42 of the computing device 38 may be operable to execute a lightweight viewer 46. The lightweight viewer 46 may be a separate software application executable by the computing device 38 or may be a service provided by the computing device 22 which may be accessible by a thin client or browser over a network connection. The lightweight viewer 46 may be operable to access the tessellated models 36. The lightweight viewer 46 may be displayed in a display device. The lightweight viewer 46 may include a graphical user interface (GUI) 48 operable to display the tessellated model 36. The lightweight viewer 46 may be operable to read tessellated models 36 but not any CAD models 32, including CAD models 32 relating to the geometry 33 associated with the tessellated models 36.

Various techniques may be utilized to establish the tessellated models 36. The modeling environment 28 may be operable to generate one or more objects (e.g., elements), including any of the objects disclosed herein. In implementations, the objects may be field objects. The tessellated model 36 may include one or more field objects. The field objects and associated contents may be embedded within the tessellated model 36. The modeling environment 28 may be operable to store code (e.g., scripts, function calls, etc.) in the lightweight file 37 that may be operable to cause one or more functions associated with the tessellated model 36 to execute in the lightweight viewer 46, including any of the functions disclosed herein.

The modeling environment 28 may include, or may otherwise interface with, one or more APIs 50. In the implementation of Figure 1, the system 20 may include or otherwise interface with a first API 50A and a second API 50B. The functionality of the APIs 50A, 50B may be incorporated into a single API 50 or may be distributed between three or more APIs 50. The CAD system 30 and/or lightweight viewer 46 may be operable to interact with the respective CAD models 32 and tessellated models 36 according to the API 50. The lightweight viewer 46 may be configured to recognize objects, function calls, data structures, etc. specified in the API(s) 50. The API 50 may be utilized to establish one or more tessellated models 36. The API 50 may be utilized to convert the CAD models 32 to tessellated models 36.

The modeling environment 28 may include a translation module 39 operable to establish tessellated models 36 and/or lightweight files 37. The translation module 39 may be operable to interact with the API 50A to establish (e.g., render) tessellated models 36. The translation module 39 may be operable to interact with the API 50B to establish lightweight files 37 including tessellated model(s) 36 in a format (e.g., data structure) supported by the API 50B and/or lightweight viewer 46. The API 50 may be utilized to assign various information, scripts and other data to one or more fields of the field objects. The field objects may be established according to data structure(s) specified in the API 50. The API 50 may provide the ability to associate scripts with objects of the tessellated model 36. The code (e.g., script) to generate the disclosed features and/or any code that causes any associated functions to occur in the lightweight viewer (e.g., in response to selection of the objects of the model 36) may be embedded within the same lightweight file 37 as the objects of the model 36 associated with the model geometry 33. The scripts and other code may be executed in response to user interaction and/or selection of the respective field object. The script may be specified according to JavaScript or another scripting language supported by the API 50. Storing the code that causes the function(s) associated with the objects and other features in the lightweight file 37 itself allows for the publisher to control the file presentation directly and does not require a special viewer.

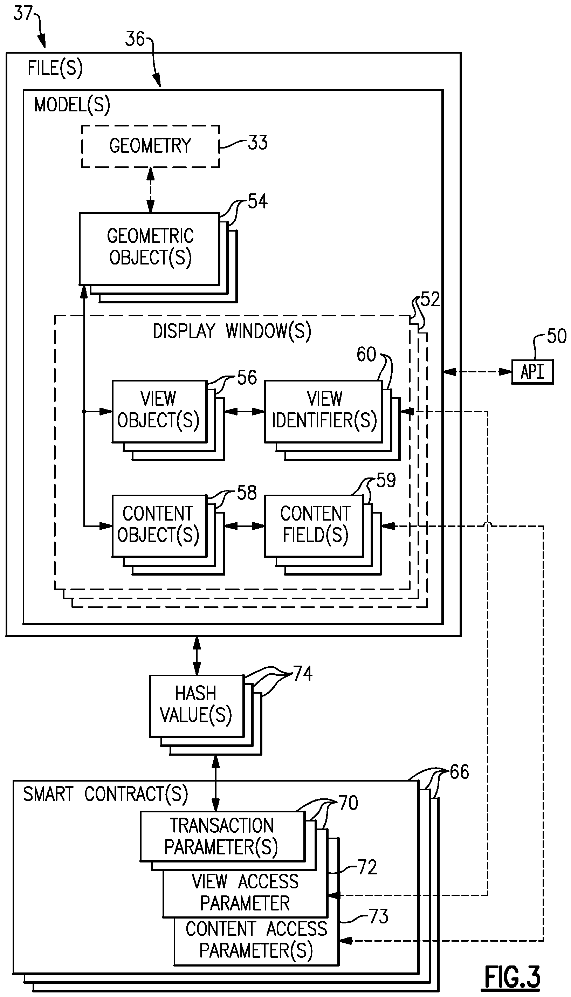

Figure 3 schematically discloses a tessellated model 36 according to an implementation. The tessellated model 36 may include any of the objects and associated structures disclosed herein. The tessellated model 36 may be established with respect to one or more data structures specified in the API 50. Various techniques may be utilized to establish relationships between the various objects of the tessellated model 36, including one or more static and/or dynamic links which may be specified in field(s) of the field objects. The API 50 may be utilized to establish the objects and links.

Referring to Figure 4A, with continuing reference to Figures 1-3, the tessellated model 36 may establish a user interface 48. The user interface 48 may be suitable for a lightweight viewer, such as lightweight viewer 46, which may display the tessellated model 36 according to the API 50. Figure 4A discloses an implementation of the user interface 48 in a lightweight viewer 46. The tessellated model 36 may include the tessellated geometry, information associated or presented with the tessellated geometry, and/or information utilized to establish the user interface 48.

The user interface 48 may include one or more display windows 52 which may serve to divide the user interface 48 into different areas. In the implementation of Figure 4A, the display windows 52 may include a first (e.g., main) viewing window 52-1, a second (e.g., navigation) window 52-2, a third (e.g., preview) window 52-3, a fourth (e.g., information) window 52-4, and a fifth (e.g., information) window 52-5. The information window 52-4 may be a dynamic information window that may dynamically display information. The information may be contextual depending on what view the user may select. The information window 52-5 may be a persistent information window, which may always be visible in the user interface 48 and may display information without change. The information may include the title, part number, document number, etc. that may uniquely identify the design. Although the user interface 48 is shown with five display windows 52, it should be understood that fewer or more than five display windows 52 may be utilized in accordance with the teachings disclosed herein. The viewing window 52-1 and/or preview window 52-3 may be operable to display one or more depictions of the geometry 33. The windows 52-2, 52-4 and/or 52-5 may be operable to display various information relating to the geometry 33 and/or other aspects of the design. In implementations, the window(s) 52 may be operable to display information associated with one or more attributes specified in the lightweight file 37. Attribute(s) may be associated with the geometry 33 and/or depictions (e.g., views) of the geometry 33, but some attribute(s) may be specified at a global (e.g., file) level. The attributes may be specified in a header of the file 37.

The modeling environment 28 may be operable to generate one or more geometric objects 54. The modeling environment 28 may be operable to generate a tessellated model 36 that includes the geometric object(s) 54. The geometric objects 54 may establish a tessellation of geometry 33 (e.g., Figure 2). The tessellation of the geometry 33 may be associated with a respective CAD model 32. The viewing window 52-1, preview window 52-3 and/or another display window 52 may be operable to display geometry 33 established by one or more geometric objects 54 of the tessellated model 36. The geometric objects 54 may be operable to display various depictions of the tessellation of the geometry 33 in the viewing window 52-1 and/or another window 52 of the user interface 48. Each of the geometric objects 54 may be associated with one or more graphics that may depict a geometry of the design. The depictions may include two-dimensional and/or three-dimensional views of the geometry 33 and may include solids, wireframes, transparencies, etc.

The modeling environment 28 may be operable to generate one or more view objects 56. Each of the view objects 56 may be associated with a respective depiction of the geometric object(s) 54 associated with the geometry 33. The view objects 56 may be associated with the navigation window 52-2 and/or another window 52 of the user interface 48. The navigation window 52-2 may be operable to display one or more of the view objects 56, which may be depicted in a list. The viewing window 52-1 may be operable to display the depiction in response to user interaction or selection of the respective view object 56.

The view objects 56 may be assigned respective view identifiers 60. The view identifiers 60 may uniquely identify the view objects 56 and associated views (e.g., depictions) from each other. Various formats may be utilized to specify the view identifiers 60, such as a character (e.g., alpha-numeric) string. The geometric object(s) 54 may be operable to display the tessellation of the geometry 33 in the viewing window 52-1 according to one or more views associated with respective view identifiers 60. Each of the views may be associated with a respective depiction of the geometric object(s) 54 and/or other information in the user interface 48. The depictions may include various orientations of the geometry 33. The depictions may include various information which may be displayed adjacent to the geometric object(s) 54, including any of the information disclosed herein such as datums, annotations, etc. The views may include non-geometry information such as notes, repair information instructions on cleaning part(s) associated with the geometry 33, etc.

The navigation window 52-2 and/or another portion of the user interface 48 may be operable to display the view object(s) 56 according to the respective view identifiers 60. In implementations, the view identifiers 60 may be associated with respective aliases that may be displayed in the navigation window 52-2. The navigation window 52-2 may be operable to display the view object(s) 56 in a (e.g., linked) list 62 according to the respective view identifiers 60. The viewing window 52-1 may be operable to display the depiction in response to selection of the respective view object 56 from the linked list 62 and/or another portion of the user interface 48.

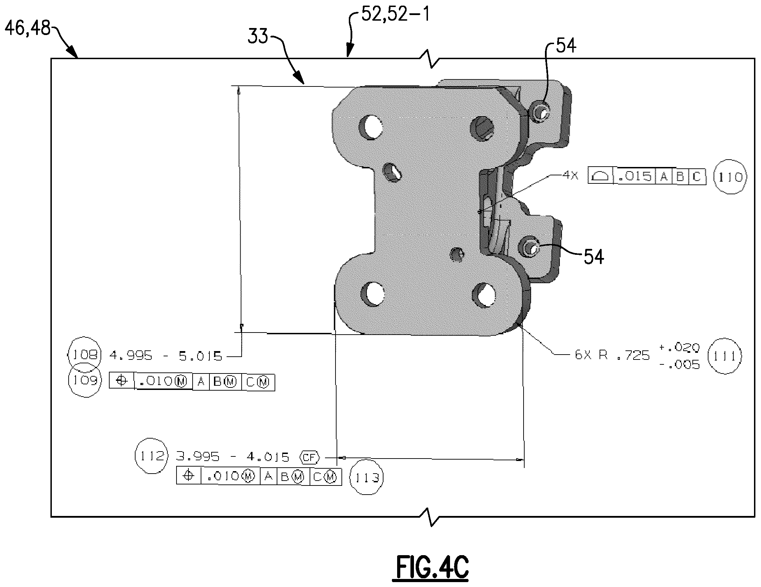

In the implementation of Figure 4A, the view objects 56 may include first and second view objects 56-1, 56-2. The view object 56-1 may be associated with an overall representation of the geometry 33 (e.g., 03_OVERALL). The second view object 56-2 may be associated with another depiction of the geometry 33, such as a depiction including one or more datums or other annotations (e.g., 04_DATUMS, see Figure 4C). The viewing window 52-1 may be operable to display the depiction of the geometry 33 in response to selection of the respective view object 56.

The preview window 52-3 may be operable to display a depiction of the geometry 33 associated with the respective view object 56 in response to user interaction. In implementations, a user may interact with the user interface 48 by positioning a cursor on or otherwise adjacent to the view object 56 to cause the preview window 52-3 to display the respective depiction (e.g., preview) of the geometry 33, which may be displayed in the viewing window 52-1 in response to selection of the view object 56 (e.g., mouse click).

The information window 52-4 may be operable to display information in the user interface 48. The information may be generic and/or may be associated with the geometry 33. The information window 52-4 may be dynamically linked to one or more of the view objects 56 such that selection of the view object 56 may cause information to update in the information window 52-4.

The modeling environment 28 may be operable to generate one or more content objects 58. The tessellated model(s) 36 may include the content object(s) 58. The content object(s) 58 may be operable to establish the information window 52-4. The content objects 58 may be operable to selectively display information associated with the tessellated model 36 and/or respective geometry 33 in the information window 52-4 and/or another portion of the user interface 48. The content objects 58 may be operable to establish the information window 52-4 such that the information window 52-4 may be spaced apart from, but may be concurrently displayed with, the viewing window 52-1 in response to opening the tessellated model 36 in the lightweight viewer 46.

The content objects 58 may be assigned various information, including information associated with the tessellated model 36. The information may be assigned to content fields 59 associated with the respective content objects 58 (Figure 3). In implementations, the content fields 59 may be associated with information specified in a data structure (e.g., template) readable by the lightweight viewer 46. The lightweight file 37 may store the information in the data structure according to the API 50. In other implementations, the information may be stored directly in the respective content fields 59. The content field 59 may be a portion of the content object 58 or may be another object linked to the content object 58. Various techniques may be utilized to define the information associated with the content fields 59, including various data types or structures such as character, string, integer, boolean, array, date, time, etc. In implementations, the content fields 59 may contain code (e.g., script), which may be executable by the API 50 and/or lightweight viewer 46. The information assigned to the content objects 58 may be the same or may at least partially differ from information assigned to other content objects 58. The information may be associated with various details of the organization responsible for the CAD model 32. The information may include personnel(s) and/or organization(s) assigned to designing, reviewing, manufacturing, etc., of the component(s), assembly or system. The information may include unique identifiers associated with geometry 33 (e.g., part numbers, names, descriptions, etc.). The information may include a revision history of the CAD model 32, various notes or statements associated with the CAD model 32, a bill of material (BOM) associated with component(s) represented by the geometry 33, etc. The content objects 58 may be operable to display information assigned to the respective content field 59 in respective portions of the information window 52-4. The information displayed in the information window 52-4 may include one or more statements. The statements may be established by one or more respective content fields 59. The modeling environment 28 may be operable to link one or more of the content objects 58 to one or more of the view objects 56 such that information displayed in the information window 52-4 may update in response to user interaction with, or selection of, the respective view objects 56.

Referring back to Figures 1 and 3, the system 20 may include a distribution environment 69. The computing device 22, such as a smart contract server 68, may be operable to execute the distribution environment 69. The distribution environment 69 may be operable to distribute and/or control access to the tessellated model(s) 36, tessellated file(s) 37 and/or associated information based on one or more smart contracts 66 associated with the geometry 33. The distribution environment 69, smart contract server 68 and/or another computing device 22 may be operable to generate the smart contract 66. The distribution environment 69 may incorporate, or may be operable to interface with, the modeling environment 28.

The smart contract 66 may include one or more transaction parameters 70. The distribution environment 69 may be operable to determine the transaction parameter(s) 70 associated with the smart contract 66. The transaction parameters 70 may be associated with the geometry 33 and/or one or more entities (e.g., parties), computing devices, manufacturing devices, etc., associated with the smart contract 66.

The transaction parameters 70 may include various parameters associated with entities (e.g., parties) associated with the smart contract 66, such as an entity identifier associated with an entity, internet protocol (IP) address(es) and/or domain(s) associated with the entity (e.g., IP address of the computing device 38), and/or asset identifier(s) associated with manufacturing device(s) of the entity, such as a coordinate measuring machine (CMM) or Computer aided manufacturing (CAM) machine. The transaction parameters 70 may include various parameters associated with the geometry 33, such as an access duration of the tessellated model 36 and/or tessellated file 37, part number(s) assigned to the geometry 33, etc. The transaction parameters 70 may include one or more repair limit parameters associated with the geometry 33. The repair limit parameters may specify limitations and/or processes for repairing component(s) associated with the geometry 33.

The transaction parameters 70 may include a view access parameter 72 specifying one or more of the view identifiers 60. Each instance of the tessellated model 36 may be associated with a respective (e.g., distinct) combination of the views. The combination of views may be specified by the view access parameter 72. The combinations of views associated with the instances of the tessellated model 36 may be the same or may differ from each other.

The transaction parameters 70 may include one or more content access parameters 73 that may specify access constraints to information associated with the tessellated model 36, including the content objects 58 and/or content fields 59. Each constraint may permit, limit and/or exclude access to the respective information. The information may include any of the information disclosed herein, including one or more datums, annotations, repair limits and/or material characteristics associated with the geometry 33. The content access parameter 73 may be established to limit access based on export control(s) associated with the geometry 33. The modeling environment 28 may be operable to generate different instances of the tessellated model 36 according to the transaction parameters 70, including the view access parameter 72 and/or content access parameter 73.

The distribution environment 69 may be operable to generate (e.g., transactional) hash value(s) 74 for the respective tessellated file(s) 37. The hash value 74 may be generated based on at least some, fewer than all, or all transaction parameter(s) 70 of the smart contract 66. The smart contract 66 may include the hash value 74 of the respective tessellated file 37. The hash value 74 may be stored as a transaction parameter 70.

The distribution environment 69 may be operable to store the smart contract(s) 66, or otherwise cause the smart contract(s) 66 to be stored, in respective block(s) 78 of a blockchain 76. The smart contract 66 may include the hash value 74 of the respective tessellated file 37 and/or the transaction parameter(s) 70. The smart contract 66 may include a memory location associated with the respective instance of the tessellated file 37. In implementations, the distribution environment 69 may be operable to cause the tessellated file 37 to be stored in a respective block 78 of the blockchain 76.

The smart contract 66 may include logic operable to control access to the tessellated model 36 and/or tessellated file 37, including the associated views and/or information, based on the hash value 74 and/or transaction parameter(s) 70. The smart contract 66 may be operable to permit access to the tessellated file 37 in response to one or more criteria being met, but the smart contract 66 may be operable to block access to the tessellated file 37 in response to the one or more criteria not being met. The criteria may include receiving information in a request that may match the hash value 74 and/or associated transaction parameters 70. In implementations, the computing device 38 may be operable to generate the request. The smart contract server 68 and/or another computing device 22 may be operable to receive the request. The smart contract 66 may be operable to cause the tessellated file 37 to be displayed in the user interface 48 accessible by a requesting device associated with the request in response to the one or more criteria being met. In implementations, the smart contract 66, distribution environment 69 and/or another portion of the system 20 may be operable to communicate the tessellated file 37 to requesting device and/or other computing devices associated with the smart contract 66 prior to receiving the request. The tessellated model 36 may include a first mode in which one or more views and/or information may be hidden or otherwise inaccessible. The tessellated file 37 may be operable to display a reduced resolution (e.g., thumbnail) of the geometry 33 in the user interface 48 when in the first mode. The tessellated model 36 may include a second mode in which the previously inaccessible views and/or information may be displayed or otherwise accessible in the user interface 48. The tessellated model 36 may be operable to change from the first mode to the second mode in response to the requesting meeting the criteria. The tessellated model 36 may include one or more objects (e.g., button) that may be operable to execute code (e.g., a script) in response to selection by the user. The code may be operable to generate the request. In other implementations, the smart contract 66, distribution environment 69 and/or another portion of the system 20 may be operable to communicate the tessellated file 37 to requesting device and/or other computing devices associated with the smart contract 66 only after approving the request.

The tessellated model 36 may include two or more views associated with respective depictions of the geometry 33 in the user interface 48. In the implementation of Figures 4A-4B, the tessellated model 36 may include a total of sixteen views associated with respective view identifiers 60. It should be understood that any number of views may be utilized in accordance with the teachings disclosed herein.

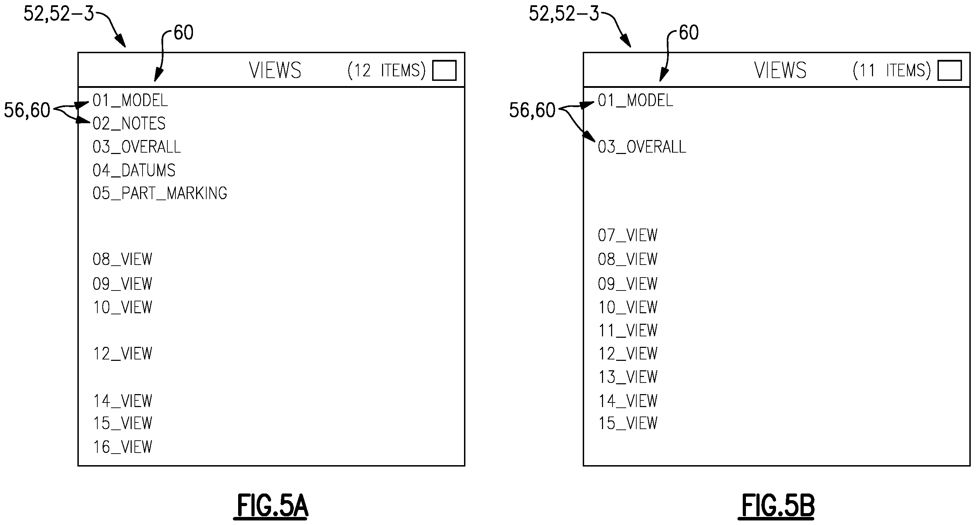

The system 20 may be operable to limit access to specific views of the tessellated model 36. The modeling environment 28 and/or distribution environment 69 may be operable to generate more than one instance of the tessellated model 36, such as a first instance and a second instance. The instances may include all, or only a subset, of all objects and associated information of the tessellated model 36. The first instance may be associated with a first combination of the views. The first instance may include all sixteen views of the tessellated model 36. The second instance may be associated with a second combination of the views that may differ from the first combination of the views. The first combination may include one or more views omitted from the second combination, and vice versa. The second combination may include a lesser number of the views. The second combination of the views may exclude one or more views of the first combination of views. In implementations, the second instance of the tessellated model 36 may exclude the datum and/or part marking views (e.g., Figure 5B). The omitted view(s) may be excluded from the instance of the tessellated model 36 and/or associated tessellated file 37 such that the omitted view(s) may not be identified in the navigation window 52-3 and/or displayed in the viewing window 52-1 of the user interface 48. The modeling environment 28 may be operable to generate the instance of the tessellated model 36 such that any geometric object(s) 54, view object(s) 56 and/or content objects 58 that are only associated with the omitted view(s) may also be omitted to exclude access to the omitted features by a recipient of the model 36 and/or file 37, which may limit the risk of unauthorized access. The modeling environment 28 may be operable to store at least one, or each, instance of the tessellated model 36 in a respective tessellated file 37. In implementations, the different instances may be stored as different blocks 78 of the same blockchain 76. The smart contract 66 may be operable to permit access to the respective block 78 based on the level of access of a requesting entity.

In implementations, the first instance may be associated with full access to the tessellated model 36. The second instance may be associated with limited access to the tessellated model 36. The smart contract 66 may be operable to permit access to the first instance of the tessellated file 37 in response to the one or more criteria being met. The smart contract 66 may be operable to permit access to the second instance of the tessellated file 37, but not the first instance, in response to fewer than all criteria being met. The smart contract 66 may be operable to permit access to the first instance once the remaining criteria are met.

The smart contract 66 may be operable to permit display of one or more of the requested views on a requesting device in response to one or more criteria being met, such as the computing device 38. The criteria may include receiving information in a request by the requesting device that may match the hash value 74 and associated transaction parameter(s) 70. But, the smart contract 66 may be operable to block display of one or more of the requested views on the requesting device in response to the criteria not being met.

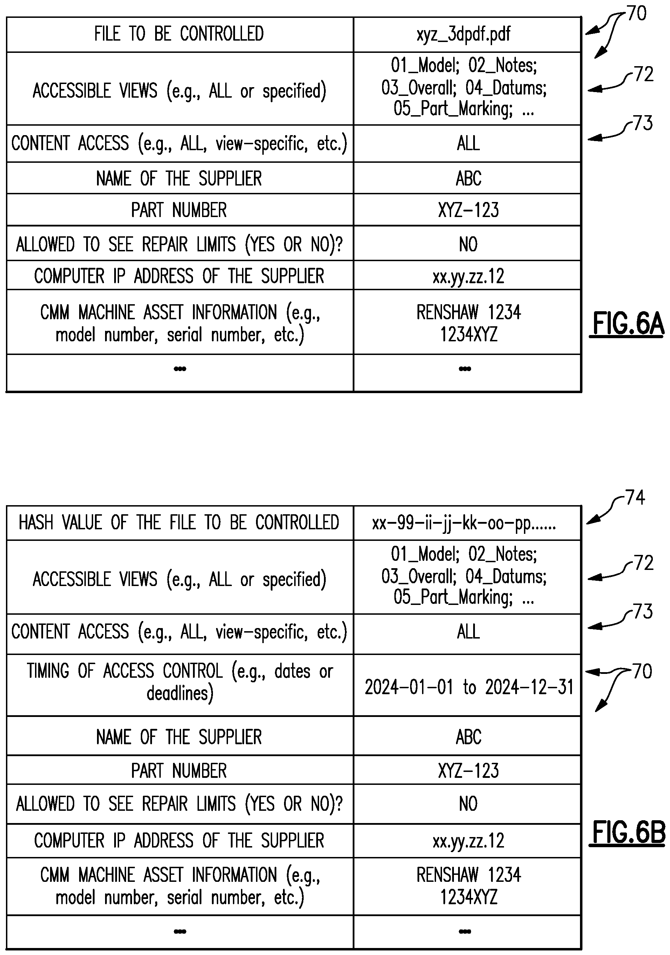

Figure 6A discloses a non-limiting example of transaction parameters 70 that may be utilized to generate a hash value 74 associated with a tessellated file 37. Figure 6B discloses a non-limiting example of transaction parameters 70 that may be associated with a smart contract 66, such as the hash value 74 and associated transaction parameters 70 of Figure 6A. The implementation of Figures 6A-6B may be associated with the tessellated model 36 of Figures 4A-4B.

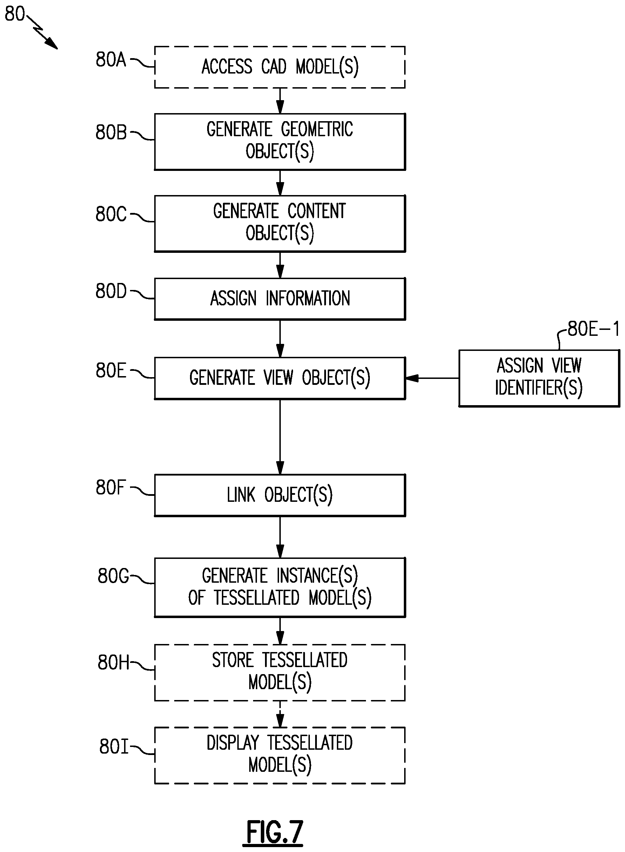

Figure 7 discloses a method of establishing and/or interacting with tessellated models and/or tessellated files in a flow chart 80 according to an implementation. The method 80 may be utilized to generate one or more tessellated models associated with design geometry. The geometry may be defined in one or more associated CAD models. The tessellated models may exclude any CAD models associated with the geometry. Fewer or additional steps than are recited below could be performed within the scope of this disclosure, and the recited order of steps is not intended to limit this disclosure. The modeling environment 28 and/or distribution environment 69 may be programmed with logic for performing method 80. Reference is made to the system 20.

Referring to Figure 1, with continuing reference to Figure 7, one or more CAD models 32 may be accessed at step 80A. The CAD model 32 may be associated with respective geometry 33. The geometry 33 may be stored in the CAD model 32. A CAD system 30 may be utilized to define the geometry 33 in the CAD model 32.

Referring to Figures 2-4A, with continuing reference to Figures 1 and 7, one or more geometric objects 54 may be generated at step 80B. The geometric objects 54 may establish a tessellation of the geometry 33. The geometric objects 54 may be stored in a tessellated model 36. The geometric objects 54 may be operable to display the tessellation of the geometry 33 in the viewing window 52-1 and/or another display window 52 of the user interface 48.

Referring to Figures 3 and 4A, with continuing reference to Figures 1 and 7, one or more content objects 58 may be generated at step 80C. The content objects 58 may be operable to establish the information window 52-4 of the user interface 48.

At step 80D, information associated with the geometry 33 and/or other information may be assigned to the content objects 58. The information may be stored in one or more content fields 59. The information may be displayed utilizing any techniques disclosed herein. The content objects 58 may be operable to selectively display the respective information in the information window 52-4 and/or another portion of the user interface 48.

At step 80E, one or more view objects 56 may be generated. The view objects 56 may be associated with respective depictions of the geometry 33. Step 80E may include assigning view identifiers 60 to the respective view objects 56 at step 80E-1. The depictions may be associated with respective layers that may occupy the same region in the viewing window 52-1 of the user interface 48. The view objects 56 may be operable to selectively activate the layer associated with the respective view and deactivate the remainder of the layers associated with the other views in response to selection of the view object 56. The user may interact with the navigation window 52-2 to select the view objects 56, which may be displayed according to the view identifiers 60.

At step 80F, one or more of the objects may be linked to other object(s) of the tessellated model 36, including any of the objects disclosed herein. The objects may include the geometric objects 54, view objects 56, content objects 58, etc. The objects may be linked to associated layers of the viewing window 52-1.

At step 80G, one or more instances of tessellated model(s) 36 may be generated. The instances of the tessellated model 36 may be generated utilizing any of the techniques disclosed herein. The tessellated model 36 may include any of the objects and features disclosed herein, such as the geometric objects 54, view objects 56, content objects 58, etc.

At step 80H, the instance(s) of the tessellated model(s) 36 may be stored in one or more lightweight files 37. The files 37 may exclude the CAD model(s) 32 associated with the respective geometry 33. The instances of the tessellated model(s) 36 may be operable to display respective combinations of views that depict the geometry 33 in the user interface 48. The geometric object(s) 54 may be operable to display the tessellation of the geometry 33 in the user interface 48 according to one or more views (e.g., Figures 4A-4C). The view objects 56 may be associated with respective view identifiers 60 and respective depictions of the geometric object(s) 54 in the user interface 48. Some of the objects may be common to the set of view identifiers 60, while others may not.

At step 801, the instance(s) of the tessellated model(s) 36 may be displayed in a lightweight viewer 46. Step 801 may include establishing the user interface 48 in the display according to the objects of the tessellated model 36. The tessellated model 36 may cause the lightweight viewer 46 to execute code including one or more scripts, which may be specified in the content fields 59 of the content objects 58 or may otherwise be embedded in the tessellated model 36. Step 801 may include displaying one or more depictions of the geometry 33 in the display window(s) 52 associated with the respective instance of the tessellated model 36.

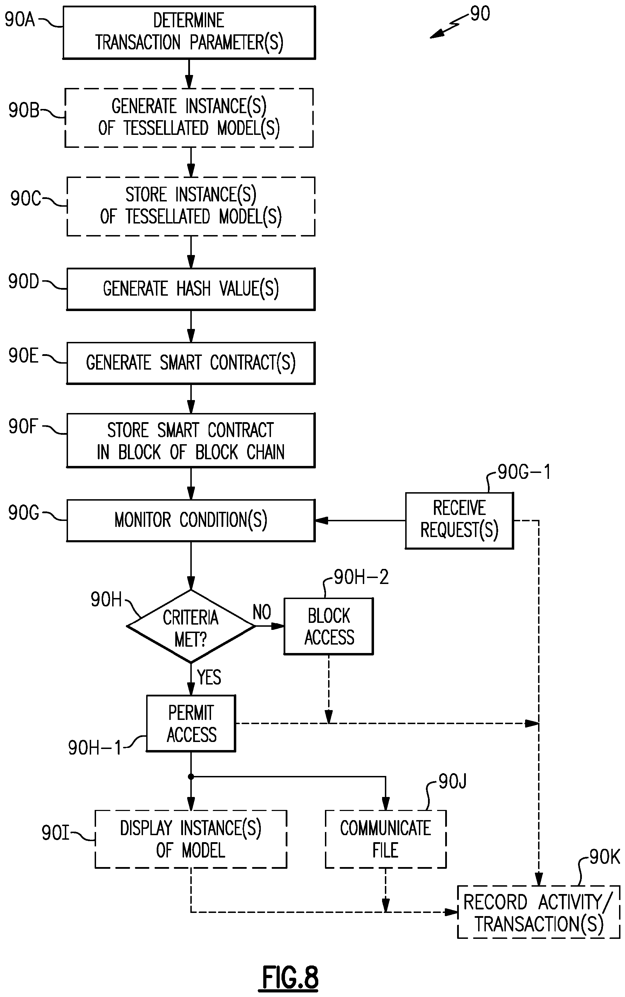

Figure 8 discloses a method of distribution for tessellated models and/or tessellated files in a flow chart 90 according to an implementation. Method 90 may incorporate any of the steps of method 80. Method 90 may be utilized to control access to one or more instances of a tessellated model and/or tessellated file, which may be generated according to any of the techniques disclosed herein. Method 90 may be utilized to share and/or control access to other types of files and information, including files associated with various design and manufacturing information. Fewer or additional steps than are recited below could be performed within the scope of this disclosure, and the recited order of steps is not intended to limit this disclosure. The modeling environment 28 and/or distribution environment 69 may be programmed with logic for performing method 90. Reference is made to the system 20.

Referring to Figures 1 and 3, with continuing reference to Figure 8, one or more transaction parameters 70 associated with a smart contract 66 may be determined at step 90A. The transaction parameters 70 may include any of the parameters disclosed herein, such as a view access parameter 72 and/or content access parameter 73. The view access parameter 72 may specify one or more view identifiers 60.

At step 90B, one or more instances of tessellated model(s) 36 may be generated utilizing any of the techniques disclosed herein. At step 90C, one or more instances of the tessellated model(s) 36 may be stored in memory. Step 90C may include storing the instance(s) of the tessellated model(s) 36 in respective tessellated file(s) 37 readable by a lightweight viewer. Each instance of the tessellated model 36 may be associated with a respective combination of the views specified by the view access parameter 72. In implementations, the instances may include a a first instance and a second instance of the tessellated model 36. The first instance may be associated with a first combination of the views. The second instance may be associated with a second combination of the views that may differ from the first combination of the views.

At step 90D, hash value(s) 74 for the respective tessellated file(s) 37 may be generated based on one or more of the transaction parameters 70, including the view access parameter 72 and/or content access parameter 73 (e.g., Figure 6A).

At step 90E, one or more smart contracts 66 may be generated utilizing any of the techniques disclosed herein. The smart contract 66 may include the hash value 74 generated at step 90D. The smart contract 66 may include the transaction parameter(s) 70, including the transaction parameter(s) 70 determined at step 90A and/or associated with the hash value 74 generated at step 90D.

At step 90F, the smart contract(s) 66 may be stored in respective block(s) 78 of a blockchain 76. Step 90F may include storing the block 78 in a pre-existing blockchain 76 or may include generating a new blockchain 76. The smart contract 66 may be operable to execute in response to one or more criteria being met. The criteria may be established by the transaction parameter(s) 70. Step 90F may include storing the tessellated model(s) 36 and/or tessellated file(s) 37 in a respective block 78 of the blockchain 76 and/or at another (e.g., designated) memory location. The tessellated model(s) 36 and/or tessellated file(s) 37 may be stored in the same block 78 as the associated smart contract 66 and/or another block 78 accessible by the smart contract 66. The designated memory location may be accessible by the smart contract 66, but it may be separate from the blockchain 76 itself.

At step 90G, one or more conditions associated with the smart contract(s) 66 may be monitored. The conditions may be associated with criteria specified in the smart contract 66. Step 90G may include receiving one or more requests to access the instance(s) of the tessellated model 36 and/or tessellated file 37 at step 90G-1. The request may be generated by a requesting device associated with an entity (e.g., party) associated with the smart contract 66 utilizing any of the techniques disclosed herein. The request may be generated by a client application executable on the requesting device or through a webpage or portal.

At step 90H, a determination may be performed to determine whether the request meets the criteria of the respective smart contract 66. Step 90H may include comparing information in the request to the specified criteria. In implementations, the smart contract 66, the distribution environment 69 and/or another portion of system 20 may be operable to verify or otherwise determine that the credentials provided in the request match the transaction parameters 70 or otherwise meet the criteria. The information may be associated with one or more of the transaction parameters 70, including any of the parameters disclosed herein. Step 90H may include permitting access to the tessellated model 36 and/or tessellated file 37 in response to the criteria being met at step 90H-1, but step 90H may include blocking access to the tessellated model 36 and/or tessellated file 37 in response to the criteria not being met at step 90H-2. The criteria may include receiving information in the request by the requesting device that matches the hash value 74 and/or associated transaction parameter(s) 70 associated with the hash value 74 and/or the smart contract 66. Step 90H-1 may include permitting display of one or more of the views on the requesting device in response to one or more criteria being met. The instances of the tessellated model 36 may include a first instance and a second instance associated with respective first and second combinations of views. Permitting access at step 90H-1 may include permitting access to one of the first and second combinations according to the combination of the views specified by the view access parameter 72. Step 90H-2 may include blocking display of one or more of the views on the requesting device in response to the criteria not being met. In implementations, the smart contract 66 may be operable to perform step 90H, including the permitting step 90H-1 and/or the blocking step 90H-2. In implementations, step 90H may include logging any activity on the blockchain 76 as appended blocks 78 on the blockchain 76 (e.g., block(s) 78 of Figure 1), including permitted and/or blocked requests and associated request information.

Various techniques may be utilized to permit access to the instance(s) of the tessellated model(s) 36 and/or tessellated file(s) 37. At step 901, the instance(s) of the tessellated model(s) 36 may be displayed in a display associated with the requesting device utilizing any of the techniques disclosed herein. At step 90J, the respective tessellated file 37 may be communicated to a memory location accessible by the requesting device. Access and/or display on the requesting device may be limited to the view(s) specified by the view access parameter 72 and/or information specified by the content access parameter 73.

At step 90K, any and/or all requests, transactions and/or other activity on the blockchain 76, including any activity associated with the smart contract 66, may be logged as appended blocks 78 on the blockchain 76 (e.g., block(s) 78 of Figure 1). In implementations, each request to access the instance(s) of the tessellated model 36 and/or tessellated file 37 at step 90G-1 may be recorded as a separate block 78. Each permitted access at step 90H1 and/or blocked access at step 90H-2 may be recorded as a separate block 78. Each instance of displaying the model at step 901 and/or communicating the tessellated file 37 at step 90J may be recorded as a separate block 78. The recorded activity may include any of the data and/or other information disclosed herein, including any of the information associated with the request or transaction, such as username, IP address, machine name, requested model and/or file, time and/or date of request, etc. In implementations, the distribution environment 69 and/or another portion of the system 20 may be operable to store any and/or all requests, transactions and/or other activity associated with the smart contract 66 and/or blockchain 76 that may occur subsequent to storing the smart contract 66 on the block chain 76 as one or more separate (e.g., appended) blocks 78 on the block chain 76.

The systems and methods disclosed herein may be utilized to generate tessellated models associated with geometry of one or more components, assemblies and/or systems. The tessellated models may be stored in relatively compact files, which may be readable by a lightweight viewer provided to users who may not have access to a CAD system. The systems and methods disclosed herein may be utilized to distribute and/or control access to tessellated model(s) and/or tessellated files. The disclosed techniques may be utilized to monitor and track entities who access data associated with the file and/or models, which may be stored as respective blocks in the blockchain. Access may be specified by parameters associated with a smart contract, which may be agreed upon and/or modified by parties to the contract. Access may be limited only to authorized entities according to parameters of the smart contract. Access may be removed for entities that are no longer permitted to obtain data. Access may be provided utilizing the blockchain, which may improve efficiency and timeliness in providing access to requested models and/or files.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system (20) for distributing a tessellated model (36) comprising:
one or more processors (24) coupled to memory (26);
wherein the one or more processors (24) are collectively operable to execute a distribution environment (69), and the distribution environment (69) is operable to:
access a computer-aided design (CAD) model (32) associated with geometry (33);
generate a tessellated model (36) including one or more geometric objects (54) that establish a tessellation of the geometry (33), the one or more geometric objects (54) operable to display the tessellation in a viewing window (52-1) of a user interface (48) according to a plurality of views associated with respective view identifiers (60), each of the views associated with a respective depiction of the one or more geometric objects (54) in the user interface (48);
determine one or more transaction parameters (70) associated with a smart contract (66), the one or more transaction parameters (70) including a view access parameter (72) specifying one or more of the view identifiers (60);
store at least one instance of the tessellated model (36) in a respective tessellated file (37) readable by a lightweight viewer (46), the at least one instance of the tessellated model (36) associated with a combination of the views specified by the view access parameter (72); and
generate a hash value (74) for the respective tessellated file (37) based on the one or more transaction parameters (70).

2. The system (20) as recited in claim 1, wherein the distribution environment (69) is operable to:
generate the smart contract (66), the smart contract (66) including the hash value (74) and the one or more transaction parameters (70); and
store the smart contract (66) in a block (78) of a blockchain (76).

3. The system (20) as recited in claim 2, wherein the distribution environment (69) is operable to:
store the tessellated file (37) in the block (78) of the block chain (76); and/or
store each transaction associated with the smart contract (66) in a respective block (78) on the block chain (76).

4. The system (20) as recited in claim 1, 2 or 3, wherein:
the smart contract (66) is operable to permit access to the tessellated file (37) in response to one or more criteria being met, the one or more criteria including receiving information in a request that matches the hash value (74) and the one or more transaction parameters (70), but block access to the tessellated file (37) in response to the one or more criteria not being met, and
optionally the smart contract (66) is operable to cause the tessellated file (37) to be displayed in the user interface (48) accessible by a requesting device associated with the request in response to the one or more criteria being met.

5. The system (20) as recited in any preceding claim, wherein the one or more transaction parameters (70) include at least one of the following:
an entity identifier associated with an entity;
an access duration of the tessellated file (37);
a part number assigned to the geometry (33);
an internet protocol (IP) address and/or domain associated with the entity;
one or more repair limit parameters associated with the geometry (33); and
an asset identifier associated with a manufacturing device.

6. The system (20) as recited in any preceding claim, wherein the distribution environment (69) is operable to:
generate one or more content objects (58) operable to selectively display information associated with the tessellated model (36) in the user interface (48); and
wherein the tessellated model (36) includes the one or more content objects (58).

7. The system (20) as recited in claim 6, wherein the one or more transaction parameters (70) include a content access parameter (73) that specifies access constraints to the information, optionally wherein the information includes at least one of the following:
one or more datums associated with the geometry (33);
one or more annotations associated with the geometry (33);
one or more repair limits associated with the geometry (33); and
one or more material characteristics associated with the geometry (33).

8. The system (20) as recited in any preceding claim, wherein:
the at least one instance of the tessellated model (36) includes a first instance and a second instance;
the first instance is associated with a first combination of the views; and
the second instance is associated with a second combination of the views that differs from the first combination of the views.

9. The system (20) as recited in claim 8, wherein:
the smart contract (66) is operable to permit access to the first instance of the tessellated file (37) in response to the one or more criteria being met, and is operable to permit access to the second instance of the tessellated file (37) but not the first instance in response to fewer than all of the one or more criteria being met; and
the second combination of the views excludes one or more views of the first combination.

10. The system (20) as recited in any preceding claim, wherein:
the tessellated model (36) includes one or more view objects (56) associated with the respective depiction of the one or more geometric objects (54);
the one or more view objects (56) are assigned the respective view identifiers (60);
the user interface (48) includes a navigation window (52-2) operable to display the one or more view objects (56) in a linked list (62) according to the respective view identifiers (60); and
the viewing window (52-1) is operable to display the depiction in response to selection of the respective view object (56) from the linked list (62).

11. The system (20) as recited in any preceding claim, wherein the tessellated model (36) excludes any CAD model (32) associated with the geometry (33).

12. A method of distribution for a tessellated model (36) comprising:
generating a tessellated model (36) including one or more geometric objects (54) that establish a tessellation of geometry (33) stored in a computer-aided design (CAD) model (32), wherein the one or more geometric objects (54) are operable to display the tessellation in a user interface (48) according to a plurality of views, the view objects (56) associated with respective view identifiers (60) and respective depictions of the one or more geometric objects (54) in the user interface (48);
determining one or more transaction parameters (70) associated with a smart contract (66), the one or more transaction parameters (70) including a view access parameter (72) specifying one or more of the view identifiers (60);
storing at least one instance of the tessellated model (36) in a respective tessellated file (37) readable by a lightweight viewer (46), the at least one instance of the tessellated model (36) associated with a combination of the views specified by the view access parameter (72);
generating a hash value (74) for the respective tessellated file (37) based on the one or more transaction parameters (70); and
permitting display of one or more of the views on a requesting device in response to one or more criteria being met, the one or more criteria including receiving information in a request by the requesting device that matches the hash value (74) and the one or more transaction parameters (70), but blocking display of the one or more of the views on the requesting device in response to the one or more criteria not being met.

13. The method as recited in claim 12, further comprising:
generating the smart contract (66), the smart contract (66) including the hash value (74) and the one or more transaction parameters (70); and
storing the smart contract (66) in a block (78) of a blockchain (76), wherein the smart contract (66) is operable to perform the permitting and blocking steps.

14. The method as recited in claim 12 or 13, wherein:
the permitting step includes communicating the respective tessellated file (37) to a memory location accessible by the requesting device.

15. The method as recited in claim 12, 13 or 14, wherein:
the at least one instance of the tessellated model (36) includes a first instance and a second instance, the first instance is associated with a first combination of the views, and the second instance is associated with a second combination of the views that differs from the first combination of the views; and
the permitting step includes permitting access to one of the first and second combinations according to the combination of the views specified by the view access parameter (72).
